# EUROPEAN PATENT APPLICATION

(11) **EP 2 982 488 A1**
(43) Date of publication of application: **10.02.2016**
(21) Application number: 14179634.2
(22) Date of filing: 04.08.2014
(51) Int. Cl.: B29C 47/06, B29C 47/56, B29C 47/08, B32B 7/06, B29C 51/02

(54) **Method of manufacturing two or more polymer films concurrently on a single film forming machine**

(71) Applicant: Ube Engineering Plastics S.A., 12100 Castellon de la Plana (ES)
(72) Inventor: Passe, Christopher, E-12100 Castellón de la Plana (ES)
(74) Representative: Plougmann & Vingtoft A/S

(57) **Abstract**

The present invention relates to a method of manufacturing two or more polymer films (4a,4b) concurrently on one film forming machine, each of the polymer films (4a,4b) comprising at least one layer (5) of polymer material. The method comprises using polymer materials for neighbouring layers (5) of different films (4a,4b) which polymer materials are different and mutually non-bonding. The two or more polymer films (4a,4b) are delaminated along the mutually non-bonding layers 5 as part of the manufacturing process. In this way a traditional disadvantage of certain material combinations is turned into an advantage of the invention.

## Description

### FIELD OF THE INVENTION

The present invention relates to a method of manufacturing polymer films each comprising at least one layer of polymer material, and in particular to a method in which two or more films are made concurrently on one film making machine and delaminated as part of the manufacturing process.

### BACKGROUND OF THE INVENTION

Polymer films are used for a large number of applications especially within the field of packaging, such as for packaging of food products or medical devices, agriculture, construction, industrial uses etcFor some applications, a simple film structure comprising only one type of polymer, a so-called monolayer film, is sufficient, whereas for other applications complex film structures in the form of a laminate of a number of different polymer materials, so-called multilayer films, are necessary. This is typically the case for applications where the desired physical, mechanical and chemical properties can only be obtained by using a combination of materials. Examples of such properties are tensile strength, UV barrier properties and water or gas impermeability.

Today co-extrusion lines which can produce multilayer films of up to 9 layers are provided as standard, and machines having a higher number of extruders, such as 11 and 13, have already been launched in the market. Such machines are designed for the manufacturing of complex film structures, and by varying the combination of polymer material being processed in the individual extruders, they are considered very versatile machines that can be switched over to process a large range of film materials. These machines with a large number of extruders are also appropriate for manufacturing of films with thick cheap layers in combination with expensive thin layers. However, such machines are unnecessarily complex for the manufacturing of standard or basic film structures consisting of only a few layers even though they can be used for this purpose. Such products could more profitably be manufactured by e.g. a three extruders' line adapted to produce laminates having up to three layers.

This means that a machine with few extruders, such as three, can only be used to manufacture simple film structures, and a machine with many extruders, such as seven to thirteen, is needed to manufacture complex film structures and many possible laminate designs. The latter can also be used for simple film structures but will be over-engineered therefore resulting in unnecessarily high manufacturing and operational costs.

The currently used extrusion lines for manufacturing of multilayer polymer films are able to produce structures with a high number of layers, and this number is expected to increase in the future. The market needs thick and complex films for some applications and thin, and for some applications also simple, films for other applications. With known manufacturing methods this need is met by using different machines for simple and complex films, respectively.

Hence, an improved method of manufacturing polymer films would be advantageous, and in particular a more efficient and/or versatile method would be advantageous.

### OBJECT OF THE INVENTION

It is an object of the present invention to provide a method of manufacturing polymer films with which a higher degree of flexibility with respect to the range of multilayer films that can be made by a given machine is obtained.

It is an object of some embodiments of the present invention to provide a method with which polymer films for the first and the second layers, respectively, of enclosures formed by these layers, such as lid and bottom films of thermoforming packages, can be made concurrently in one process.

It is another object of at least some embodiments of the present invention to provide a method with which multi-layer polymer films can be made that show less curling than what is seen with prior art methods.

In particular, it may be seen as an object of the present invention to provide a method of manufacturing two or more polymer films that solves the above mentioned problems of the prior art.

### SUMMARY OF THE INVENTION

Thus, the above described object and several other objects are intended to be obtained in a first aspect of the invention by providing a method of manufacturing two or more polymer films concurrently on one film forming machine, each of the polymer films comprising at least one layer of polymer material, the method comprising the steps of:
- using polymer materials for neighbouring layers of different films which polymers are different and mutually non-bonding, and
- delaminating the two or more polymer films along the mutually non-bonding layers as part of the manufacturing process.

Possible film making machines which can be used in accordance with the present invention will be well-known to a person skilled in the art of polymer film manufacturing; examples of such machines are mentioned below. They typically comprise known components including extruders, dies, winders, cooling system, guide rollers, and heating means. As described above, film making machines are typically adapted to manufacture laminated films by comprising a plurality of extruders.

By "non-bonding" is preferably meant that no or only a very limited force must be applied for the delaminating, such as a force small enough to allow for manual delamination. The delamination should furthermore be possible without causing any significant damage to the films. In one embodiment, a perpendicular force of at most 2N/15 mm film width is needed to separate two adjacent non-bonding layers.

At least two of the two or more films may have a different layer structure. Alternatively or in combination therewith, at least two of the two or more films may have the same layer structure. The actual materials used will depend on the intended use of the films. Some examples of materials that can be used with the present invention are :
- Polyolefins (such as PE, PP, EVA, ionomers, plastomers or other PE or PP copolymers) are commonly used for their high flexibility, medium mechanical, high water vapour barrier, good sealing, properties and good processability.
- Polyamides (or Nylon) are well known for their high mechanical, heat, abrasion and chemical resistance, medium gas barrier, and optical properties.
- EVOH are especially appreciated for their high gas barrier properties
- PET and PET copolymers provide high stiffness, good mechanical and medium gas barrier properties.
- PVC and PVDC are materials with high mechanical and gas barrier properties.

The mutually non-bonding layers may be selected from the following pairs of materials: PE-PP, PE-PA, PE-EVOH, PP-PA or PP-EVOH. However other material combinations may also be used, such as those indicated in Table 1.

Traditionally, one machine is used for preparing one film, i.e. the various different polymer layers need to bind to each other. Otherwise, a film of inferior quality will be the result. The present invention is based on the knowledge within the film making industry that if layers of certain combinations of materials are to be arranged next to each other, it is necessary to place a Tie layer between them to obtain a bonding. "Tie" is used to denote a resin with good adhesive properties. It is used to obtain a good bonding between layers of polymer materials that would otherwise not bond. Examples of known co-extruded structures including such Tie layers are PA/Tie/PE, which can be considered a simple multilayer film structure, and PE/Tie/PA/EVOH/PA/Tie/PE, which can be considered a more complex co-extruded film structure. In these and all following examples, a "/" indicates an interface between two layers. An even more complex structure resembling the latter but comprising additional PE-layers is:
PE₁/PE₂/Tie/PA/EVOH/PA/Tie/PE₂/PE₁.

In relation to the present invention, layers of material that do not mutually bond are placed next to each other but without a Tie layer. Hereby, a delamination between the resulting non-bonded layers is enabled, such delamination traditionally being avoided by the Tie layer. In this way a traditional disadvantage of certain material combinations is turned into an advantage of the invention. The design of the co-extruded structure, i.e. including the choice and arrangement of the polymer materials, should be performed to result in the desired number of films being produced. If e.g. three films are to be produced, the co-extruded structure should have two pairs of mutually non-bonding pairs of materials. This is discussed in further detail below.

In any of the embodiments of the present invention, the film forming machine may be selected from airblown air-cooled, airblown water-cooled, casting, and oriented film extrusion. However, any film forming machine adapted to manufacture a co-extruded film having at least two layers may be used in the present invention.

Machines that can produce a large number of layers, typically by having a correspondingly high number of extruders, can be used to make complex co-extruded structures comprising several layers. The advantage of the present invention is that such machines will also be profitable for the manufacturing of films having only a few layers, because more films can be produced concurrently thereby increasing the output. As an example, two films of simple structures can be manufactured concurrently on a 7 layers line, i.e. a machine having 7 extruders, by the following material combination: PA/Tie/PE//PA/Tie/PE/PE. The "//" here and in the following denotes the interface between non-bonding layers; i.e. where the delamination is to take place. This means that by choosing the material combinations in accordance with the desired output, the same machine can be used for simple structures as well as complex structures. In principle the number of films that can be manufactured concurrently can be as high as the number of extruders.

The method of the present invention may further comprise the step of winding the two or more polymer films onto separate winders for each film. This means that a part of the machine might have to be slightly redesigned to either comprise such additional winders or to comprise means for guiding the manufactured films towards winders not being part of the machine itself. Such guiding means will typically include rollers arranged to ensure an appropriate guiding of the films.

It is also envisioned that certain applications of the two or more films produced by the method according to the invention may benefit from two or more films being wound onto the same winder. Hence, in one embodiment, the present invention comprises the additional step of winding two or more films onto the same winder. In a further embodiment, especially in the case of winding two films together onto the same winder, the mutual orientation of the films may be changed before winding the films onto the winder.

The inventive idea behind the present invention may be utilized in an advantageous manner in certain applications of polymer films. Hence, as an example of one embodiment of the invention, two polymer films on the same film roll having been produced concurrently according to the method of the invention and having had their mutual orientation changed so that the non-bonding layers no longer face each other may advantageously be used in thermoforming applications as the lid and bottom layers.

The method of the invention may advantageously be utilized in slightly modified machines for manufacturing films. Hence, in a second aspect, the invention relates to a film forming machine for manufacturing two or more polymer films concurrently by a method according to the present invention, the film forming machine comprising:
- a plurality of extruders,
- a die,
- a cooling system,
- means for delaminating the two or more films, and
- optionally two or more winders for winding two or more polymer films manufactured concurrently by a method according to the invention.

In the prior art, film forming machines have the number of winders required to wind the number of films traditionally produced in film forming machines, i.e. one winder for casting machines and two winders for airblown machines. However, applying the method of the invention and delaminating the two or more co-extruded films requires additional winders. Hence, in a third aspect, the invention relates to a film forming machine for manufacturing two or more polymer films concurrently by a method according to the present invention comprising:
- a plurality of extruders,
- a die,
- a cooling system,
- optionally means for delaminating the two or more films,
- optionally means for reversing the orientation of one or more polymer films manufactured concurrently by a method according to the invention, and
- two or more winders for winding co-extruded, delaminated films separately, wherein the number of winders is m*(n+1), n being at least 1 and m being the number of films produced on the machine when no delamination is carried out.

In a fourth aspect, the invention relates to a film forming machine for manufacturing two or more polymer films concurrently by a method according to the present invention comprising:
- a plurality of extruders,
- a die,
- a cooling system,
- optionally means for delaminating the two or more films,
- means for reversing the orientation of one or more polymer films manufactured concurrently by a method according to the invention, and
- optionally one or more winders for winding two non-bonded films together.

In a fifth aspect, the invention relates to a machine for preparing an item or substance enclosed in polymer film material comprising:
- optionally means for placing two films obtainable by step a) of the method according to the invention rolled onto a single winder,
- two films obtainable by step a) of the method according to the invention rolled onto a single winder,
- optionally means for delaminating the two films,
- optionally means for changing the mutual orientation of the two films so that at least one of the two surfaces along which the two films has been delaminated faces in the opposite direction,
- optionally means for placing an item or substance to be contained in the enclosure between the two films, and
- means for joining the two films around the item or substance by heat sealing to form the enclosure.

The two films obtainable by step a) of the method according to the invention may have been rolled onto a single winder before operating this machine. Hence, the means for placing two films obtainable by step a) of the method according to the invention rolled onto a single winder may or may not be present in the machine according to this aspect. Similarly, the two films obtainable by step a) of the method according to the invention may already have had their mutual orientation changed before being rolled onto a single winder before operating this machine. Hence, the means for changing the mutual orientation of the two films may or may not be present in the machine according to this aspect.

In one embodiment, said machine may further comprise means for thermoforming at least one of the two films.

In a further embodiment, said machine may further comprise means for separating the formed enclosures obtained by operating the machine according to the method of the invention.

The first, second aspect, third, fourth, and fifth aspects of the present invention may each be combined with any other aspect. These and other aspects of the invention will be apparent from and elucidated with reference to the embodiments described hereinafter.

### BRIEF DESCRIPTION OF THE FIGURES

The method of manufacturing two or more polymer films according to the invention will now be described in more detail with regard to the accompanying figures. The figures show one way of implementing the present invention and is not to be construed as being limiting to other possible embodiments falling within the scope of the claims.
Figure 1 shows schematically a part of the known technology used for manufacturing laminated polymer films. Figures 1.a and figure 1.b show embodiments having three and seven extruders, respectively. Figure 1.c shows a possible use of a machine having seven extruders for manufacturing a three-layered polymer film.
Figure 2 shows schematically how a machine having 7 extruders can be used to manufacture 2 films by a method according to the present invention.
Figure 3 shows schematically how a cast machine configuration can be modified by adding a winder when it is to be used for manufacturing two films instead of one.
Figure 4 shows schematically how an airblown machine configuration can be modified by adding two winders when it is to be used for manufacturing four films instead of two.
Figure 5 shows schematically an embodiment in which two films are used to form enclosures containing an item or a substance.
Figure 6 shows schematically an embodiment in which two films are manufactured, one of them being made into containers by thermoforming and the other one forming lids for the containers.

### DETAILED DESCRIPTION OF EMBODIMENTS OF THE INVENTION

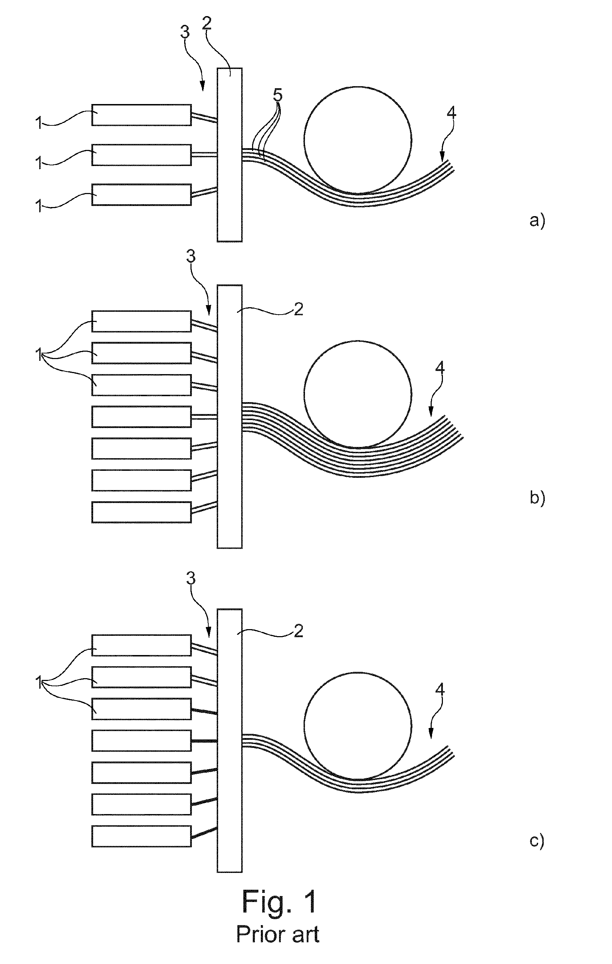

Figure 1 shows schematically a part of the known technology used for manufacturing laminated polymer films. A number of different methods exist in which polymer material is fed from a number of extruders 1 towards a die 2 in which the laminated structure is obtained. Examples of such methods are airblown air-cooled, airblown water-cooled, casting, and oriented film extrusion; all of these methods will be well-known to the person skilled in the art. The gap 3 shown between the extruders 1 and the die 2 in the figures is for illustrative purposes only to be able to schematically show the amount of material.

Only a slight modification of existing machines may be necessary in order to take advantage of the present invention, namely the possible need for additional winders to match the actual number of films 4 being made. Further modifications may be necessary for some embodiments of the invention as will be described below.

Figure 1.a and figure 1.b show prior art embodiments having three and seven extruders 1, respectively. In this and the following figures, a machine having seven extruders 1 is shown as an example of a more versatile/complex machine than the one having only three extruders. However, the present invention can be applied to machines having any number of extruders 1 as long as there are at least two. The simple machine with three extruders 1 shown in figure 1.a can only be used for relatively simple film structures having up to three layers 5 which may be of the same or different polymers. Which Tie layers to use for a given combination of polymer materials will be well known to a person skilled in the art. The machine having seven extruders 1 can be used for manufacturing e.g. three-layered structures as shown schematically in figure 1.c. In figure 1.c, the polymer material from the lower five of the extruders 1 are the same so that less material is to be fed from each of these extruders 1 to obtain a laminate corresponding to the one in figure 1.a. The thickness of the layers 5 indicates the amount of material. This means that the machine with seven extruders 1 is over-engineered for this film structure resulting in an unnecessarily high cost.

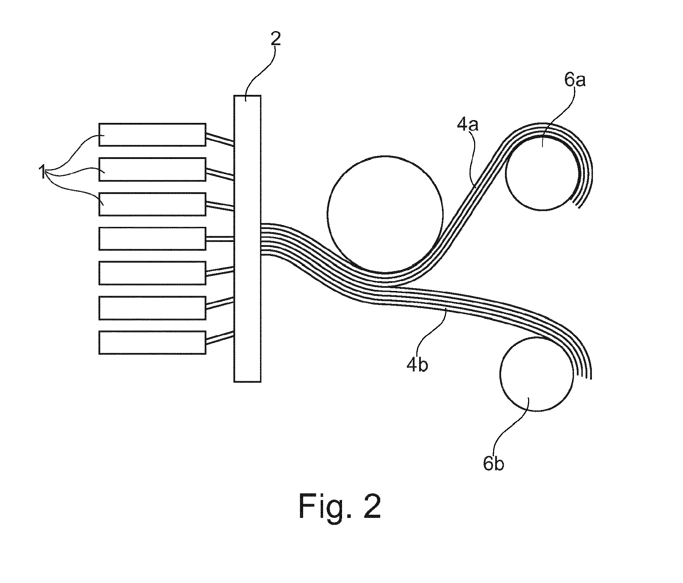

Figure 2 shows schematically how the present invention can be used on a machine with seven extruders 1 so that two polymer films 4a,4b are manufactured concurrently on one film forming machine. In accordance with the present invention, each of the polymer films 4a,4b comprises at least one layer 5 of polymer material; in the embodiment illustrated in figure 2, the films 4a,4b have three and four layers 5, respectively. In order to make this possible, the method comprises using polymer materials for neighbouring layers 5 of different films 4a,4b which polymers are to be different and mutually non-bonding. In the embodiment illustrated in figure 2, the polymer material from extruders 1 three and four from above are mutually non-bonding. The method further comprises delaminating the two films 4a,4b along the mutually non-bonding layers 5 as part of the manufacturing process. In the embodiment in figure 2, two polymer films 4a,4b are wound onto separate winders 6a,6b for each film 4a,4b. Correspondingly, two extra winders (not shown) would be needed for the concurrent manufacturing of three films.

The present invention can be used for any possible film structure that is physically and chemically obtainable for a given number of extruders 1. Presently available film forming machines can typically produce up to the following number of layers 5: 7, 9, 11, and 13, but the invention is useful for any type of machine producing two or more layers. Such possible film structures include but are not limited to the embodiments wherein at least one of the two or more films is a laminate comprising at least two layers 5 of different polymer materials and an embodiment wherein at least one of the two or more films is a laminate comprising at least two layers 5 of the same polymer material.

The following Table 1 shows combinations of polymer materials that are typically used in film co-extrusion. In the table, √ indicates a good adhesion, ∼ indicates a fair adhesion, and X indicates no adhesion.

**Table 1**

| **PVDC** | **PS** | **PET-G** | **PET** | **EVOH** | **PA12** | **PA6 /12** | **PA6 /6.6** | **PA6.6** | **PA6** | **PP** | **Zn ionomer** | **Na Ionomer** | **EVA (low VA %)** | **HDPE** | **mLLDPE** | **LLDPE** | **LDPE** | **VLDPE** | **ULDPE** | |
|---|---|---|---|---|---|---|---|---|---|---|---|---|---|---|---|---|---|---|---|---|
| X | X | X | X | X | X | X | X | X | X | X | ∼ | X | √ | √ | √ | √ | √ | √ | √ | **ULDPE** |
| X | X | X | X | X | X | X | X | X | X | X | ∼ | X | √ | √ | √ | √ | √ | √ | √ | **VLDPE** |
| X | X | X | X | X | X | X | X | X | X | X | ∼ | X | √ | √ | √ | √ | √ | √ | √ | **LDPE** |
| X | X | X | X | X | X | X | X | X | X | X | ∼ | X | √ | √ | √ | √ | √ | √ | √ | **LLDPE** |
| X | X | X | X | X | X | X | X | X | X | X | ∼ | X | √ | √ | √ | √ | √ | √ | √ | **mLLDPE** |
| X | X | X | X | X | X | X | X | X | X | X | ∼ | X | √ | √ | √ | √ | √ | √ | √ | **HDPE** |
| √ | X | ∼ | ∼ | X | X | X | X | X | X | √ | √ | √ | √ | √ | √ | √ | √ | √ | √ | **EVA (low VA %)** |
| X | X | X | X | X | X | X | X | X | X | X | √ | √ | √ | X | X | X | X | X | X | **Na Ionomer** |
| X | X | X | X | X | | √ | √ | | √ | X | √ | √ | √ | X | ∼ | ∼ | ∼ | ∼ | ∼ | **Zn ionomer** |
| X | X | X | X | X | X | X | X | X | X | √ | X | X | √ | X | X | X | X | X | X | **pp** |
| X | X | X | X | √ | X | √ | √ | √ | √ | X | √ | X | X | X | X | X | X | X | X | **PA6** |
| X | X | X | X | | X | √ | √ | √ | √ | X | √ | X | X | X | X | X | X | X | X | **PA6.6** |
| X | X | X | X | √ | X | √ | √ | √ | √ | X | √ | X | X | X | X | X | X | X | X | **PA6/6.6** |
| X | X | X | X | √ | √ | √ | √ | √ | √ | X | √ | X | X | X | X | X | X | X | X | **PA6/12** |
| X | X | X | X | X | √ | √ | X | X | X | X | | | X | X | X | X | X | X | X | **PA12** |
| X | X | X | X | √ | X | √ | √ | | √ | X | X | X | | X | X | X | X | X | X | **EVOH** |
| | X | √ | √ | X | X | X | X | X | X | X | X | X | ∼ | X | X | X | X | X | X | **PET** |
| | X | √ | √ | X | X | X | X | X | X | X | X | X | ∼ | X | X | X | X | X | X | **PET-G** |
| X | √ | X | X | X | X | X | X | X | X | X | X | X | X | X | X | X | X | X | X | **PS** |
| √ | X | | | X | X | X | X | X | X | X | X | X | √ | X | X | X | X | X | X | **PVDC** |

In the context of the present invention, when referring to two adjacent polymer layers being "non-bonding", the skilled person is well aware of what is meant by this term. In the context of prior art film manufacture, "non-bonding" polymer layers are those that require a Tie adhesive in order to form one cohesive film. Hence, in the context of the present invention, mutually "non-bonding" polymers may also be defined as those that require an interposed Tie adhesive layer in order to form one cohesive film.

Alternatively, mutually "non-bonding" polymers may be defined in terms of the ease with which they are separated. Typically, mutually "non-bonding" polymers may be separated manually, i.e. by simply using one's hands. In other words, only a very limited force is needed for the separation. Hence, in one embodiment, mutually "non-bonding" polymer layers are those that require a perpendicular force of at most 2 N/15 mm film width in order to be separated.

### Examples of Tie resins being used in multilayer films are shown in the following

**Table 2:**

| **Manufacturer** | **Product** | **Description** |
|---|---|---|
| **ARKEMA** | Orevac^{®} 18360 | Maleic Anhydride modified LDPE. Specially recommended for EVOH. Blown film grade |
| | Orevac^{®} 18365 | Maleic Anhydride modified LLDPE. Specially recommended for PA. Blown film grade |
| | Orevac^{®} 18370 | Maleic Anhydride modified LLDPE. Cast film grade |
| | Orevac^{®} 18380 | Maleic Anhydride modified LLDPE. Cast film grade |
| | Orevac^{®} 18729 | Maleic Anhydride modified PP. Cast film grade |
| | Orevac^{®} 18722 | Maleic Anhydride modified PP. Cast film grade |
| | Orevac^{®} T9304 | Maleic Anhydride modified EVA. Blown film grade |
| | Orevac^{®} T9318 | Maleic Anhydride modified EVA. Blown film grade |
| **DOW** | Amplify™ IO series | Ethylene Acrylic Acid lonomer |
| | Amplify™ EA series | Ethylene-Ethyl acrylate Copolymer |
| | Amplify™ GR series | Maleic Anhydride graphted polyolefins (HDPE, VLDPE, LLDPE, Plastomer) |
| | Amplify™ TY series | Maleic Anhydride graphted polymers specially designed for packaging |
| **DUPONT** | Bynel 1100 series | Primarily acid modified EVA |
| | Bynel 2000 series | Acid-modified ethylene acrylate polymers |
| | Bynel 2100 series | Anhydride-modified ethylene acrylate copolymers |
| | Bynel 3000 series | Anhydride-modified EVA copolymers. |
| | Bynel 3100 series | Acid- and acrylate-modified EVA resins |
| | Bynel 3800 series | Anhydride-modified EVA copolymers (higher level of vinyl acetate in the EVA component) |
| | Bynel 3900 series | Anhydride-modified EVA resins (improved level of bonding to polyamides and EVOH) |
| | Bynel 4000 series | Anhydride-modified HDPE resins |
| | Bynel 4100 series | Anhydride-modified LLDPE resins |
| | Bynel 4200 series | Anhydride-modified LDPE resins |
| | Bynel 5000 series | Anhydride-modified PP resins |
| **LYONDELBASEL L** | Plexar PX 2220 | HDPE based |
| | Plexar PX 2246 | HDPE based |
| | Plexar PX 2250 | HDPE based |
| | Plexar PX 2413 | HDPE based |
| | Plexar PX 3060 | LLDPE based |
| | Plexar PX 3184 | LLDPE based |
| | Plexar PX 3227 | LLDPE based |
| | Plexar PX 3236 | LLDPE based |
| | Plexar PX 3243 | LLDPE based |
| | Plexar PX 3610 | LLDPE based |
| | Plexar PX 3747 | LLDPE based |
| | Plexar PX 5125 | Performance Tir resin. PE based |
| | Plexar PX 5335 | Performance Tir resin. PE based |
| | Plexar PX 5400 | Performance Tir resin. PE based |
| | Plexar PX 6002 | PP based |
| | Plexar PX 6005 | PP based |
| | Plexar PX 6006 | PP based |
| | Plexar PX 9125 | LDPE based |
| **MITSUI** | Admer AT1707E | Advanced grade for Cast Film with EVOH. PE type |
| | Admer AT1955E | Advanced grade for Shrink Film and Cast Film with PET and others |
| | Admer NF358E | Special grade for antifog applications with PE and EVOH or PA. PE type |
| | Admer NF377E | Standard grade for Cast Film with PA. PE type |
| | Admer NF408E | Standard grade for Bottle and Sheet with PA and EVOH. PE type |
| | Admer NF498E | Standard grade for Blown Film and Tubes with PA and EVOH. PE type |
| | Admer NF518E | Advanced grade for Blown and Cast Film and Tubes with EVOH. Standard grade for casing. PE type |
| | Admer NF528E | Very advanced grade for Blown Film with EVOH. PE type |
| | Admer NF 911E | Transparent standard grade for Bottle, Sheet, Blown Film and Cast Film with PET and others. Advanced grade for Casing. |
| | Admer QB510E | Standard grade for Bottle, Sheet and Blown Film. PP type |
| | Admer QB520E | Advanced grade for Bottle and Sheet. PP type |
| | Admer QF300E | Standard grade for Cast Film with PA. PP type |
| | Admer QF551E | Advanced grade for Film. PP type |
| | Admer SF730E | Very advanced and soft grade for high performance multilayer structures |
| **MPB** | COESIVE^{®} F30 (u) | Concentrated maleic anhydride grafted PE adhesive for multi-layer structures (EVOH, PA) |
| | COESIVE^{®} L8.92.8 (u) | Concentrated maleic anhydride grafted PE adhesive for multi-layer structures (EVOH, PA) |
| | COESIVE^{®} LL20F | Maleic anhydride grafted PE adhesive for blow film multi-layer structures (EVOH, PA) |
| | COESIVE^{®} LL20FPA | Maleic anhydride grafted PE adhesive for blow film multi-layer structures (PA) |
| | COESIVE^{®} LL35F | Maleic anhydride grafted PE adhesive for cast film multi-layer structures (EVOH, PA) |
| | COESIVE^{®} LL35FPA | Maleic anhydride grafted PE adhesive for cast film multi-layer structures (PA) |
| | COESIVE^{®} LL30M | Maleic anhydride grafted PE adhesive for blow film multi-layer structures (EVOH, PA) |
| | COESIVE^{®} LL40M | Maleic anhydride grafted PE adhesive for blow film multi-layer Anti-Fog structures (EVOH, PA, AF) |
| | COESIVE^{®} L850F | Maleic anhydride grafted PE adhesive for triple-bubble multi-layer film structures (EVOH, PA) |
| | COESIVE^{®} EV0540 | Maleic anhydride grafted Ethylene-Vinyl Acetate adhesive for cast film multi-layer structures |
| | PROESIVE^{®} PP70F | Maleic anhydride grafted PP adhesive for multi-layer film structures (EVOH, PA) |
| **YPAREX** | 8102 | C8-LLDPE based. Suitable for blown film applications |
| | 8104 E | C8-LLDPE based. Suitable for cast film applications |
| | 8106 E | C8-LLDPE based. |
| | 9106 | LLDPE based. Suitable for cast film applications |
| | 9207 | LDPE based |
| | 9401 | C6-LLDPE based. Suitable for blown film applications |
| | 9403 | C8-LLDPE. Suitable for blown/cast film applications |
| | 9601 | LLDPE based. Suitable for blown film applications |
| | 9603 | LLDPE. Suitable for blown/cast film applications |

If three films are to be manufactured concurrently on one machine, it has to be delaminated at two locations. An example leading to this configuration would be: producing 3 x PA/Tie/PE films with a 9 layers extrusion machine, i.e. PA/Tie/PE//PA/Tie/PE//PA/Tie/PE. It will also be possible to have a combination of materials that are to bond by use of an intermediate tie layer and materials that are to be delaminated. An example is PA/Tie/PE//PA/Tie/PE/PE being manufactured by a 7 layers line. If such a set-up is used to manufacture two substantially identical films, the thickness of each of the two neighbouring PE-layers is to be so that the total thickness corresponds to that of the PE-layer shown as number three, i.e. neighbouring the PA-layer.

If such a film is made with an airblown technique where the cooling is caused by the air being blown inside and outside the bubble, and if it is desired to ensure that also the internal molecular structure of the final films is similar in the two or more films, it may be necessary to use different grades of the polymers to be used for the starting materials of the different layers; such as using starting materials with different initial degrees of crystallinity (i.e. before entering the extruders).

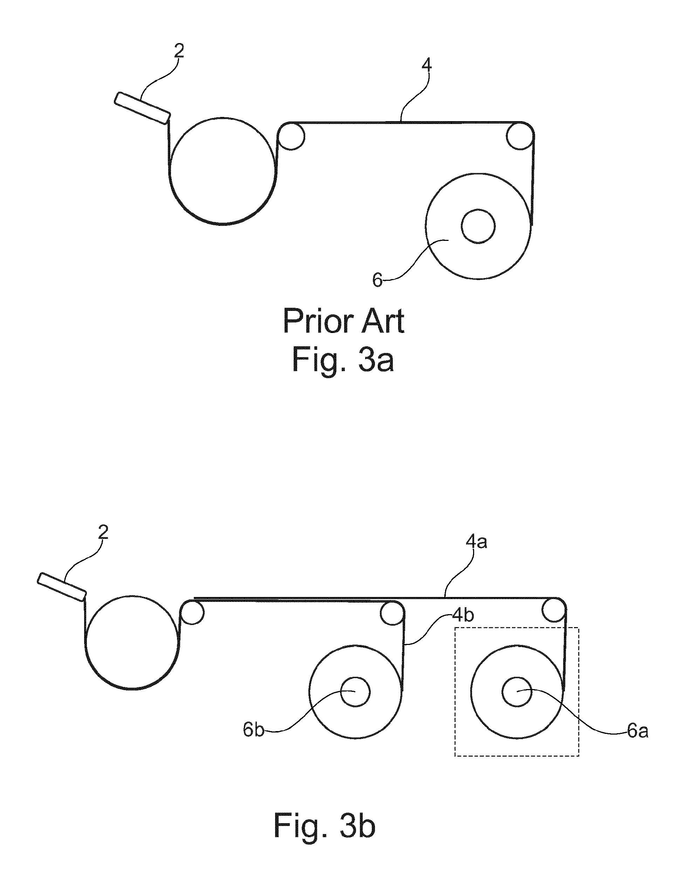

Figure 3 shows schematically a casting technique used for film manufacturing. Figure 3.a shows a known method in which one film 4 is made, and figure 3.b shows a method according to the present invention in which one delamination takes place resulting in the need for one additional winder 6b. The machine may include delamination means (not shown) for ensuring the two films 4a,4b are delaminated inline and led to the separate winders 6a,6b. Such means may include gripping means adapted to grip the films 4a,4b and move them apart as well and guiding means adapted to guide the films along the desired paths.

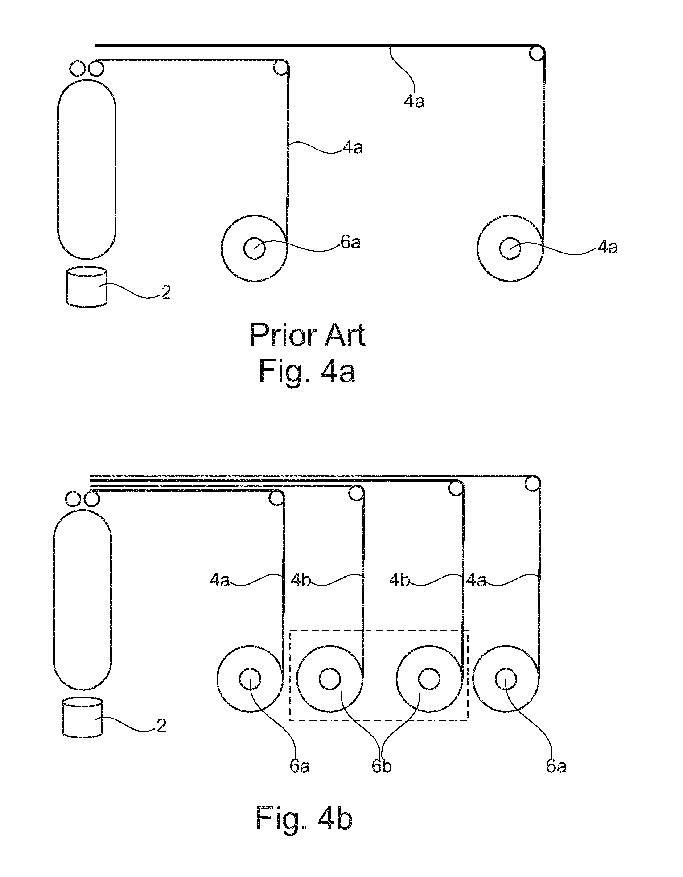

Figure 4 shows schematically an airblown technique which can be either air cooled or water cooled. Figure 4.a shows a known method in which two identical films 4a are made, typically cutting the tube shaped material into two halves that are wound into separate winders 6a. Figure 4.b shows a corresponding method according to the present invention in which one delamination takes place resulting in the need for two additional winders 6b.

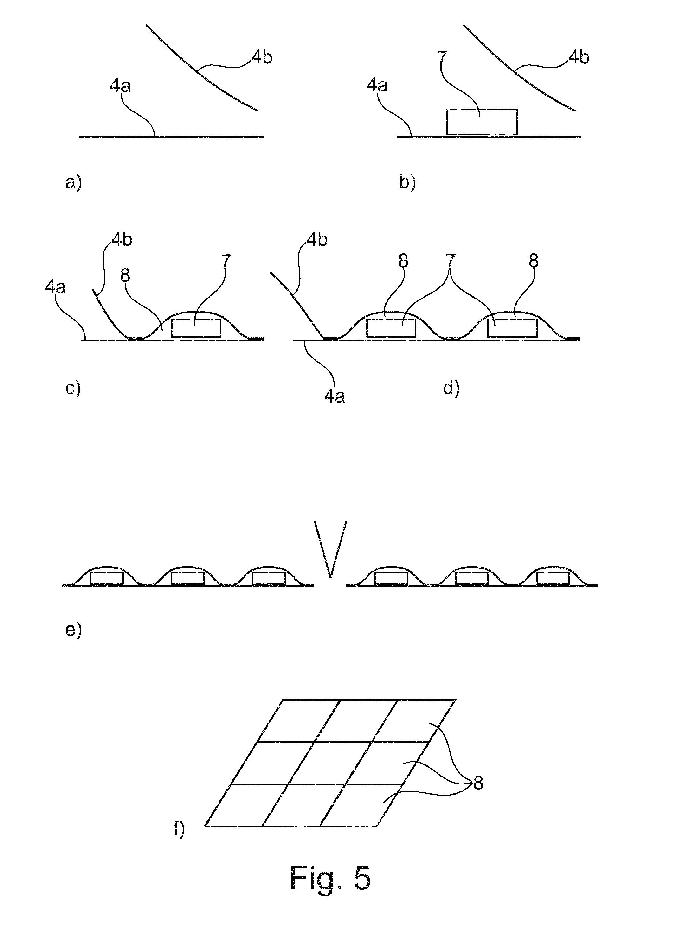

Figure 5 shows schematically and in a cross sectional view an embodiment of the invention in which two polymer films 4a,4b are produced, one of which is to form a first sidewall of an enclosure 8 and the other is to form a second sidewall of the enclosure 8. This embodiment can be used e.g. for packaging of a product, such as a food product, that is to be stored in separate enclosures until use. As shown in figures 5.a and 5.b, the method may comprise the step of separating the films 4a,4b so that the two films are located a distance apart, and placing an item 7 or substance to be contained in the enclosure 8 between the two films 4a,4b. Such an item 7 could e.g. be a single use medical equipment, such as a syringe, or it could be a piece of cheese. The wording "item" does not necessarily mean one piece of goods. It may also be e.g. a certain amount of goods provided in a plurality of pieces, such as a certain amount of crisps or nuts. The two films 4a,4b will typically be fed from different directions to the part of the manufacturing machine where the item or substance is placed to facilitate the placing of the item or substance. Then the two films 4a,4b are joined around the item or substance to form the enclosure 8 as shown in figure 5.c. The steps are repeated several times to obtain an array of coherent enclosures 8 as shown in figure 5.d. If desired, the manufacturing method may further comprise the step of separating the formed enclosures 8 from each other so that either individual enclosures or groups each containing a plurality of enclosures are obtained; this is shown in figure 5.e. Typically, there will be more than one enclosure 8 being formed across the width of the films as shown schematically in figure 5.f. This figure shows schematically a group of enclosures seen from a direction perpendicular to the one in figures 5.a to 5.e, such as seen from above if the films are travelling in a horizontal plane.

When the method as shown in figure 5 is performed with two films made concurrently according to the present invention, and when the two films are joined by heat sealing, the materials for the films are to be selected so that both delamination and heat sealing is enabled. Since the two films can be delaminated during the process, because they do not bind together when heated, the method should further comprise the step of changing the mutual orientation of the two films, unless the mutual orientation of the two films was changed prior to being wound onto the same winder, so that at least one of the two surfaces along which the two films have been delaminated faces in the opposite direction before the step of placing an item or substance. The layers which thereafter face each other should be heat sealable.

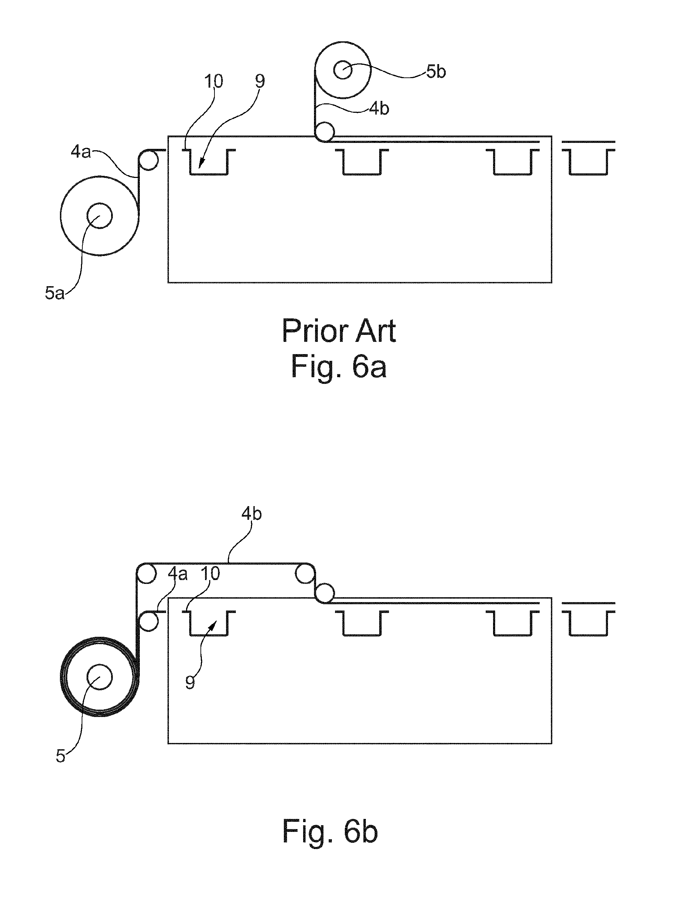

Figure 6 shows schematically and in cross sectional view another method which resembles the one in figure 5. In this embodiment two polymer films 4a,4b are wound onto the same winder, one of which is to form a bottom film and another is to form a top film of a plurality of closed containers 9. The two films 4a,4b may be produced concurrently in the same machine or separately. The method comprises thermoforming the bottom film 4a to comprise containers 9 each having an upper rim 10, placing an item or substance (not shown here) in each of the containers 9, and fastening the lid film 4b to the rims 10 of the containers 9. Figure 6.a shows a known method in which the materials for the thermoformed containers 9 and the lids are provided from separate film rolls 5a,5b and have been made by two different film making processes. Figure 6.b shows a method according to the present invention in which the two films 4a,4b are wound onto the same roll in the same machine and delaminated as part of the process as described above. As described in relation to figure 5, also in the method as shown in figure 6.b, when the two films are joined by heat sealing, the materials for the films are to be selected so that both delamination and heat sealing is enabled, and the method may further comprise the step of changing the mutual orientation of the two films so that surfaces along which the two films have been delaminated face in opposite directions, unless the mutual orientation of the two films 4a,4b was changed prior to being wound onto the same winder, and the layers which thereafter face each other should be chosen to be heat sealable.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of manufacturing two or more polymer films concurrently on one film forming machine, each of the polymer films comprising at least one layer of polymer material, the method comprising the steps of:
- a) using polymer materials for neighbouring layers of different films which polymer materials are different and mutually non-bonding, and
- b) delaminating the two or more polymer films along the mutually non-bonding layers as part of the manufacturing process.

2. The method according to claim 1, wherein at least two of the two or more films have a different layer structure.

3. The method according to claim 1 or 2, wherein at least two of the two or more films have the same layer structure.

4. The method according to any of the preceding claims, wherein the mutually non-bonding layers are selected from the following pairs of materials: PE-PP, PE-PA, PE-EVOH, PP-PA or PP-EVOH.

5. The method according to any of the preceding claims, wherein the film forming machine is selected from airblown air-cooled, airblown water-cooled, casting, and oriented film extrusion.

6. The method according to any of the preceding claims further comprising the step of winding the two or more polymer films onto separate winders for each film.

7. A method of preparing an item or substance enclosed in polymer film material comprising the steps of:
- a) using two films obtainable by step a) of the method according to claim 1 rolled onto a single winder,
- b) separating the two films so that they are located a predetermined distance apart,
- c) optionally changing the mutual orientation of the two films so that surfaces along which the two films have been delaminated no longer face each other,
- d) placing an item or substance to be contained in the enclosure between the two films, and
- e) joining the two films around the item or substance by heat sealing to form the enclosure.

8. The method according to claim 7 further comprising the steps of thermoforming the bottom film to comprise containers each having an upper rim and fastening the lid film to the rims of the containers.

9. A film forming machine for manufacturing two or more polymer films concurrently by a method according to claim 1, the film forming machine comprising:
- a plurality of extruders,
- a die,
- a cooling system,
- means for delaminating the two or more films, and
- optionally two or more winders for winding two or more polymer films manufactured concurrently by a method according to claim 1.

10. A film forming machine for manufacturing two or more polymer films concurrently by a method according to claim 1, the film forming machine comprising:
- a plurality of extruders,
- a die,
- a cooling system,
- optionally means for delaminating the two or more films,
- means for reversing the orientation of one or more polymer films manufactured concurrently by a method according to claim 1, and
- optionally one or more winders for winding two non-bonded films together.

11. A film forming machine for manufacturing two or more polymer films concurrently by a method according to claim 1 comprising:
- a plurality of extruders,
- a die,
- a cooling system,
- optionally means for delaminating the two or more films,
- optionally means for reversing the orientation of one or more polymer films manufactured concurrently by a method according to the invention, and
- two or more winders for winding co-extruded, delaminated films separately, wherein the number of winders is m*(n+1), n being at least 1 and m being the number of films produced on the machine when no delamination is carried out.

12. A machine for preparing an item or substance enclosed in polymer film material comprising:
- optionally means for placing two films obtainable by step a) of the method according to claim 1 rolled onto a single winder,
- two films obtainable by step a) of the method according to claim 1 rolled onto a single winder,
- optionally means for delaminating the two films,
- optionally means for changing the mutual orientation of the two films so that the two surfaces along which the two films have been delaminated no longer face each other,
- optionally means for placing an item or substance to be contained in the enclosure between the two films, and
- means for joining the two films around the item or substance by heat sealing to form the enclosure.

13. The machine according to claim 12 further comprising means for thermoforming at least one of the two films.
